Europäisches Patentamt

European Patent Office

Office européen des brevets

(19)

(11) Veröffentlichungsnummer: **0 182 093**
**B1**

(12) **EUROPÄISCHE PATENTSCHRIFT**

(45) Veröffentlichungstag der Patentschrift: **25.04.90**

(21) Anmeldenummer: **85113055.9**

(22) Anmeldetag: **15.10.85**

(51) Int. Cl.⁵: **C 02 F 3/30, C 02 F 3/02, C 02 F 11/00, C 02 F 1/52**

(54) **Verfahren zur Reinigung des Überstandwassers von Fäkalienschlämmen insbesondere aus Hauskläranlagen.**

(30) Priorität: **22.11.84 DE 3442535**

(43) Veröffentlichungstag der Anmeldung:
**28.05.86 Patentblatt 86/22**

(45) Bekanntmachung des Hinweises auf die
Patenterteilung:
**25.04.90 Patentblatt 90/17**

(84) Benannte Vertragsstaaten:
**AT BE CH DE FR GB IT LI NL SE**

(56) Entgegenhaltungen:
**EP-A-0 035 248**
**EP-A-0 075 298**
**DE-A-3 036 370**

**JOURNAL OF WATER POLLUTION CONTROL FEDERATION, Band 52, Nr. 5, Mai 1980, Seiten 914-922, Washington, US; Y. MAGARA et al.: "Design and performance of night soil treatment plants"**
**"LEHR- UND HANDBUCH DER ABWASSERTECHNIK", dritte Auflage, 1985,**

(73) Patentinhaber: **Heinz Dorr Deponienbetrieb GmbH**
**Unterwanger Strasse 8**
**D-8960 Kempten (DE)**

(72) Erfinder: **Dorr, Heinz**
**Unterwanger Strasse 10**
**D-8960 Kempten (DE)**
Erfinder: **Thein, Lothar**
**Öschstrasse 9**
**D-8960 Kempten (DE)**

(74) Vertreter: **Patentanwälte Dipl.-Ing. E. Eisele Dr.-Ing. H. Otten**
**Seestrasse 42**
**D-7980 Ravensburg (DE)**

(56) Entgegenhaltungen:

**Seiten 205-206, Ernst & Sohn, Berlin, DE "WASTEWATER TREATMENT PLANT DESIGN", 1977, Seiten 288-290, Lancaster Press Inc., Lancaster, US**

EP 0 182 093 B1

## Beschreibung

Die Erfindung betrifft ein Verfahren zur Reinigung des Überstandswassers von Fäkalienschlämmen, aus Hauskläranlagen nach dem Oberbegriff des Anspruchs 1.

Durch die verschärften Bestimmungen des Umweltschutzes und des Abfallbeseitigungsgesetzes wird die ordnungsgemäße Unterbringung der Fäkalien aus Kleinkläranlagen immer schwieriger. Eine Ablagerung auf landwirtschaftlich genutzten Flächen ist nach den §§ 1, 2 und 15 des deutschen Abfallbeseitigungsgesetzes nicht mehr möglich.

Es gibt eine Vielzahl ländlicher Gebiete in denen eine Kanalisation zur Ableitung der Abwässer aus Haushalten fehlt. Die Fäkalienschlämme müssen dann aus Hauskläranlagen abgesaugt und kommunalen Kläranlagen zugeführt werden. Hierbei sind jedoch die Schwierigkeiten zu berücksichtigen, die bei der Einführung in kommunale Kläranlagen entstehen können. Oftmals ist ein direktes Einleiten der konzentrierten Fäkalienschlämme in kommunale Kläranlagen nicht möglich, da dadurch das biologische Gleichgewicht der Anlage erheblich gestört werden kann.

Aus der Entgegenhaltung DE—A—3 036 370 ist ein dreistufiges Verfahren zur Behandlung von Überstandswasser von Fäkalienschlämmen bekannt geworden, mit einer Vielzahl von Verfahrensschritten und einem sehr hohen apparativen Aufwand. Das zu entsorgende Abwasser wird zunächst einer mechanischen Behandlungsstufe mit mehreren Einzelstufen zugeführt, der eine zweite Behandlungsstufe zur Behandlung des anfallenden Schlamms nachgeschaltet ist. Die sich in der ersten und zweiten Behandlungsstufe ansammelnde Flüssigkeit wird in einer dritten Behandlungsstufe biologisch-chemisch und mechanisch weiterbehandelt. Auch die dritte Behandlungsstufe besteht aus einer Vielzahl von aufwendigen Einzelstufen, die das insgesamt komplizierte Verfahren ergänzen. So eignet sich dieses Verfahren auch zur zusätzlichen Verarbeitung von industriellen Abwässern.

Der vorliegenden Erfindung liegt die Aufgabe zugrunde, ein demgegenüber stark vereinfachtes Verfahren zur Behandlung des Überstandswassers von Fäkalienschlämmen und zwar aus Hauskläranlagen zu schaffen. Dieses Verfahren soll es insbesondere vermeiden, daß derartige Abwässer kommunalen Kläranlagen zugeführt werden.

Diese Aufgabe wird durch die Kombination der Merkmale des kennzeichnenden Teils des Hauptanspruchs gelöst.

Zur Lösung des Problems bedurfte es einer intensiven Entwicklung bis schließlich ein der behördlichen Genehmigung gerechtes Verfahren vorlag. Insbesondere gelang es erst durch die Kombination einer mechanischen, einer biologischen und chemischen Reinigungsstufe sowie einer Nitrifikationsstufe ein optimales Ergebnis zu erzielen, so daß das Abwasser ohne Bedenken selbst in einen schwachen Vorfluter geleitet werden kann, d. h. Vorfluter mit sehr wenig Wasserführung. Erst durch das erfindungsgemäße Verfahren ist es möglich geworden, in einer Kläranlage konzentrierte Fäkalienschlämme so zu bearbeiten, daß das Überstandswasser gereinigt dem Vorfluter wieder zugeführt werden kann.

Nachstehend werden die einzelnen Verfahrensschritte mit der Angabe weiterer Vorteile anhand eines Ausführungsbeispiels näher erläutert.

Die der Kläranlage zugeführten Fäkalienschlämme werden von den Spezialfahrzeugen zunächst einem Schlammbecken über ein zum Boden des Schlammbeckens geführtes Befüllungsrohr zugeführt. Das Schlammbecken hat ein Fassungsvermögen von ca. 6.000 m³. Dieses dient als Sammel- und Pufferbecken, sowie als mechanische Vorklärung zur Absetzung von groben Teilen bzw. zur Zurückhaltung von Schwimmschlamm.

Erfindungsgemäß ist dem Schlammbecken ein Entnahmebecken mit einem Fassungsvermögen von ca. 1.600 m³ nachgeschaltet, wobei eine Mönch-Verbindung die beiden Becken trennt. Dieses Entnahmebecken dient zur weiteren Trennung schwererer im Bodenbereich befindlicher Stoffe vom übrigen Abwasser, d. h. zur räumlichen Trennung vom Schlammbecken und biologischer Stufe. Dort wird mittels einer Hebereinrichtung das überstehende Wasser dosiert entnommen und der biologischen Stufe zur Weiterbehandlung zugeführt. Darüber hinaus findet im Entnahmebecken eine Denitrifikation eines Teils des in nachfolgenden Stufen bereits behandelten Abwassers statt. Hierdurch erfolgt bereits ein Teilabbau des im Abwasser enthaltenen Amonium-Stickstoffs.

Die dem Schlammbecken und Entnahmebecken nachgeschaltete biologische Stufe zur Reinigung der Überstandswasser dient der Entfernung gelöster organischer Substanzen. Die biologische Reinigung erfolgt auf klassischem Wege über die einschlägig bekannten Verfahren. Erfindungsgemäß wird entweder mittels eines kunststoffgefüllten Leichtbau-Tropfkörpers oder mittels eines Walzentauchkörpers gearbeitet. Bei dem erstgenannten Fall rieselt das Abwasser durch einen runden oben und unten offenen Behälter durch eine geschüttete Brockenmasse, bestehend aus harter Schlacke, Lavaschlacke, Koks oder Kunststoff-Formkörper. Auf der Oberfläche dieser Brocken bildet sich nach einer Anlaufzeit von ca. 3 Wochen ein schleimiger Belag, der sog. biologische Rasen, der vorwiegend aus Bakterien, Pilzen und Einzellern besteht. Gelöste und kolloidal verteilte organische Stoffe des Abwassers werden dort adsorbiert und von den Organismen aerob, d. h. unter Sauerstoffeinwirkung abgebaut. Die abgespülten Teile des biologischen Rasens werden dann in einem Nachklärbecken abgetrennt.

Das dem Tropfkörper nachgeschaltete Nachklärbecken hat ein Fassungsvermögen von 350 m³. Da eine dauernde Beschickung des Tropfkörpers notwendig ist, insbesondere dann wenn aus dem Schlammteich kein Abwasser zufließt, wird eine Rückführpumpe in Betrieb genommen, die es ermöglicht, am Ende des Nachklärbeckens Abwasser zu entnehmen und dieses dem Zulauf zum Tropfkörper zuzuleiten.

Als wirtschaftliche Alternative zur biologischen Reinigung kann ein Walzentauchkörper verwendet werden. Dieser Walzentauchkörper arbeitet prinzipiell auf gleiche Weise wie der Tropfkörper, wobei jedoch die geschüttete Brockenmasse in walzenförmigen Käfigen rotiert. Verwendet werden beispielsweise zwei Walzen, Durchmesser 2 m, Länge 2 m, Besiedlungsfläche ~ 2160 m². Den Walzentauchkörpern wird ein Nachklärbecken mit einem Inhalt von ca. 350 m³ nachgeschaltet.

Für das Erreichen einer guten Abbaurate der organischen Stoffe in dieser biologischen Stufe ist neben einer guten mechanischen Vorklärung die Beseitigung von Ölen und Fetten erforderlich. Dies geschieht über eine Tauchwand zwischen Schlammbecken bzw. Entnahmebecken und biologischer Stufe.

Der Vorteil der erfindungsgemäßen Verwendung des Tropfkörper-Verfahrens liegt u. a. auch darin, daß auch sehr kleine Abwassermengen behandelt werden können, die im vorliegenden Fall gerade nicht kontinuierlich anfallen. Daneben ist der Platzbedarf gering und diewartung einfach. Die Abbaurate an organischen Substanzen kann bis zu 95% betragen.

Die bei der biologischen Reinigungsstufe entstehenden Flocken sind abgestorbene Kolonien von Mikroorganismen, die über ihren Stoffwechsel die gelösten oder kolloidalen organischen Verbindungen umsetzen, d. h. zu veratmen oder zur Synthese arteigener Substanzen verwenden.

Erfindungsgemäß wird dem Tropfkörper-Verfahren innerhalb der biologischen Reinigungsstufe eine Einrichtung zur simultanen Fällung der im Abwasser enthaltenen phosphate installiert. Dies geschieht dadurch, daß nach den Walzentauchkörpern eine Zudosierung von Fällungsmitteln vorgesehen ist.

Bei der zwischengeschalteten chemischen Stufe wird durch Zudosierung von handelsüblichen Flockungshilfsmitteln vor allem Phosphat elliminiert, sowie eine Flockenbildung zur Abscheidung nicht absetzbarer Schwebstoffe und kolloidal gelöster Substanzen begünstigt. Als Flockungsmittel wird Eisen-III-Chloridsulfatlösung verwendet.

Erfindungsgemäß ist der biologischen Reinigungsstufe mit kombinierter chemischer Fällung eine Nitrifikationsstufe nachgeschaltet, die dem Abbau von Ammonium -Stickstoff und Nitrit-Stickstoff dient. Gemäß einer behördlichen Forderung ist es notwendig, daß im Ablauf der Kläranlage der Ammonium-Stickstoffgehalt in der abgesetzten 2-Std-Mischprobe ≦ 2 mg/l beträgt. Dies wird in der Nitrifikationsstufe erreicht.

Die Nitrifikationsstufe besteht aus einem Rundbecken mit einem Druckluftbelüftungssystem und einem nachgeschalteten Nachklärbecken. Das Druckluftsystem besteht aus einem schalldicht gekapselten Drehkolbengebläse und einer an der Beckensohle angeordneten Belüftergalerie, über welche die Druckluft feinblasig in das Abwasser eingetragen wird.

Zusätzlich befinden sich Schaumstoffwürfel (Kantenlänge ca 1 cm) als Trägermaterial für die nitrifizierenden Bakterien in dem Becken, welche ca. 35% des Beckenvolumens in Anspruch nehmen.

Die nitrifizierenden Bakterien bleiben praktisch vollständig auf dem Trägermaterial haften. Darüber hinaus wirken die Schaumstoffwürfel für die aus der Belüftergalerie austretenden Luftblasen als Schikanen, was sich günstig auf den Sauerstofertragswert auswirkt. Um die geforderte Nitrikfikation zu erreichen, müssen zwei wesentliche Voraussetzungen erfüllt werden:

1. Das Abwasser sollte mindestens eine Temperatur von ca. 10° C oder darüber haben.

2. Der pH-Wert darf nicht unter 7 liegen.

Um zu verhindern, daß der pH-Wert zu weit absinkt und um den Nitrit- und Nitratgehalt durch Denitrifikation in einer der Nitrifikationsstufe vorgeschalteten O-freien-Zone zu verringern, ist vorgesehen, ein Pumpwerk mit Druckleitung nitrathaltiges Abwasser vom Austritt der Nitrifikationsstufe in das Entnahmebecken, welches als Sauerstoff-Null-Zone bezeichnet werden kann, einzuleiten. Das erforderliche Pumpwerk hierfür befindet sich zwischen dem Nitrifikationsbecken und dem zugehörigen Nachklärbecken. Um eine Entleerung der Becken während des Stillstandes der Fäkaldeponie, z. B. im Winter, zu vermeiden, ist das Gebläse mit einem polumschaltbaren Motor ausgerüstet. Bei Umschalten auf die niedrige Drehzahl wird nur so viel Luft durch das Rundbecken gefahren, daß der aerobe Zustand erhalten bleibt.

Das dem Nitrifikationsbecken nachgeschaltete Nachklärbecken hat die Aufgabe noch eventull absetzbare Stoffe zurückzuhalten, bevor das Abwasser schließlich den behördlichen Anforderungen entsprechend gereinigt, die Kläranlage verlassen kann und dem Vorfluter zugeführt wird. In diesem Nachklärbecken können Testfische gehalten werden, die als Indikator für gute Reinigungsleistung dienen.

Verfahrenstechnisch besteht die Anlage aus folgenden Stufen:

1. Vorklärung:
   Schlammbecken V = 6000 m³
   Entnahmebecken V = 1600 m³.

2. Biologische Stufe mit simultaner Phosphatfällung:
   Walzentauchtropfkörper V = 12 m³, A = 2160 m²
   Phosphatfällung mit Dosiereinrichtung
   Nachklärbecken V ≈ 350 m³

3. Nitrifikation und Denitrifikation:
   Rundbecken mit Belüftungseinrichtung und Trägermaterial
   Pumpenschacht für Teilentnahme zur Denitrifikation
   Nachklärbecken.

## Patentansprüche

1. Verfahren zur Reinigung des Überstandswassers von Fäkalienschlämmen aus Hauskläranlagen, mit einer Vorklärung, einer biologischen Reinigungsstufe mit simultaner Phosphatfällung, einer Nitrifikationsstufe sowie einer Nachklärung, gekennzeichnet durch die Kombination folgender Merkmale:

daß die Vorklärung in einem als Sammel- und Absetzbecken ausgebildeten Schlammbecken erfolgt, dem sich zur weiteren Abtrennung schwerer Sinkstoffe ein Entnahmebecken anschließt,

daß eine nachfolgende biologisch-chemische Reinigungsstufe im Tropfkörperverfahren mittels Walzentauchkörper oder Tropfkörper vorgesehen ist, wobei durch eine simultane Phosphatfällung durch Zugabe eines chemischen Fällungsmittels nach den Tropfkörpern eine verstärkte Ausflokkung nicht absetzbarer Schwebstoffe oder kolloidal gelöster Substanzen sowie eine Ausfällung der im Abwasser enthaltenen phosphate erfolgt und wobei die Abscheidung der ausgefällten Stoffe in einem nachgeschalteten ersten Nachklärbecken erfolgt,

daß der Abbau von Ammonium-Stickstoff und Nitrit-Stickstoff in einer Nitrifikationsstufe erfolgt, die aus einem Rundbecken mit Druckbelüftungssystem und Schaumstoffwürfelfüllung als Trägermaterial für Bakterien erfolgt,

daß dem Entnahmebecken vor der biologischen Reinigungsstufe nitrathaltiges Abwasser vom Austritt der Nitrifikationsstufe zur Durchführung einer Denitrifikation zugeführt wird und

daß das Abwasser aus der Nitrifikationsstufe über ein zweites Nachklärbecken und einem mechanischen Nachklärfilter dem Vorfluter zugeführt wird.

2. Verfahren nach Anspruch 1, dadurch gekennzeichnet, daß bei Durchführung der biologischen Reinigungsstufe mittels eines kunststoffgefüllten Leichtbau-Tropfkörpers eine Rezirkulationsleitung vom Nachklärbecken der biologischen Stufe zum Zulauf des Leichtbau-Tropfkörpers vorgesehen ist.

3. Verfahren nach Anspruch 1, dadurch gekennzeichnet, daß zwischen dem Schlammbecken und dem Entnahmebecken ein Überlauf in Form eines Mönchs und zwischen dem Entnahmebecken und der biologischen Reinigungsstufe sowie dem Nachklärbecken der biologischen Reinigungsstufe und der Nitrifikationsstufe je eine Tauchwand vorgesehen sind.

4. Verfahren nach einem oder mehreren der vorhergehenden Ansprüche, dadurch gekennzeichnet, daß der Schlamm aus dem Schlammbecken konditioniert, mechanisch entwässert und einer geordneten Deponie zugeführt wird, wobei das bei der Entwässerung anfallende Filtratwasser dem Wasserkreislauf der Kläranlage zugeführt wird.

## Revendications

1. Procédé de purification de liquide surnageant de matières fécales provenant des installations domestiques d'épuration, comportant une clarification préalable, une étape d'épuration biologique avec précipitation simultanée des phosphates, une étape de nitrification ainsi qu'une clarification finale, caractérisée par la combinaison des caractéristiques suivantes:

on effectue la clarification préalable dans un bassin à boues, conçu en tant que bassin de collection et de décantation auquel est relié un bassin à soutirage permettant d'effectuer une séparation plus poussée de matières en suspension lourdes,

il est prévu une étape d'épuration chimique et biologique subséquente par un procédé à lit bactérien au moyen de disques immergés ou de lits bactériens, une floculation intensifiée de matières en suspension non décantables ou de substances colloïdales dissoutes, ainsi qu'une précipitation des phosphates contenus dans l'eau résiduaire étant obtenue par suite d'une précipitation simultanée de phosphates par addition d'un agent de précipitation chimique en aval des lits bactériens, et la séparation des substances qui ont précipité étant effectuée dans un premier bassin de clarification postérieure placé en aval.

on effectue la décomposition de l'azote présent sous forme ammoniacale ou sous forme de nitrites dans une étape de nitrification qui est mise en oeuvre dans un bassin circulaire de sédimentation muni d'un système d'aération par de l'air sous pression et, en tant que matériau de support pour les bactéries, d'un matériau de remplissage constitué par des morceaux de matériau cellulaire,

on transfère les eaux usées contenant des nitrates provenant de la sortie de l'étage de nitrification dans le bassin de soutirage situé en amont de l'étage d'épuration biologique pour effectuer une dénitrification de celles-ci, et,

on transfère les eaux usées provenant de l'étape de nitrification vers la canalisation de décharge en les faisant passer dans un second bassin de clarification ultérieure et dans un filtre mécanique de clarification ultérieure.

2. Procédé selon la revendication 1, caractérisé en ce que, lorsque l'on utilise pour la mise en oeuvre de l'étape d'épuration biologique un lit bactérien de construction légère comportant un matériau de remplissage synthétique, on prévoit une conduite de recirculation allant du bassin de clarification ultérieure de l'étape d'épuration biologique à l'entrée du lit bactérien de construction légère.

3. Procédé selon la revendication 1, caractérisé en ce qu'on prévoit un trop plein sous la forme d'un déversoir creux entre le bassin à boues et le bassin de soutirage, et une paroi plongeuse respectivement entre le bassin à soutirage et l'étage d'épuration biologique et entre le bassin de clarification ultérieure de l'étage d'épuration biologique et l'étage de nitrification.

4. Procédé selon une ou plusieurs des revendications précédentes caractérisé en ce qu'on conditionne et déshydrate mécaniquement la boue provenant du bassin à boues et on la transporte à un dépôt organisé, l'eau de filtration produite lors de la déshydratation étant transférée dans le circuit d'eau de l'installation de clarification.

## Claims

1. Process for the purification of supernatant liquors from night-soil from domestic sewage treatment plants, comprising a presedimentation, a biological purification stage with simultaneous phosphate precipitation, a nitrification stage and a final sedimentation, characterized by the combination of the following features:

that the presedimentation takes place in a sludge tank constructed as collecting and settling tank, which is followed by a separation tank for the further separation of heavy sediments,

that a succeeding biological-chemical purification stage by the percolating filter method by means of cylinder aerators or percolating filters is provided, an intensified flocculation of suspended materials that cannot be settled or of colloidally dissolved substances being carried out by a simultaneous phosphate precipitation by addition of a chemical precipitation agent after the percolating filters and a pecipitation of the phosphates contained in the effluent being carried out, and a separation of the precipitated substances being carried out in a succeeding first final sedimentation tank,

that the breakdown of ammonium-nitrogen and nitrite-nitrogen is carried out in a nitrification stage which takes place in a circular tank with pressurized air aeration system and a filling of foam plastics cubes as support material for bacteria,

that nitrate-containing effluent from the outlet from the nitrification stage is fed to the separation tank upstream of the biological purification stage for the carrying out of a denitrification, and

that the effluent from the nitrification stage is fed via a second final sedimentation tank and a mechanical final clarification filter to the main channel.

2. Process according to Claim 1, characterized in that, where the biological purification stage is carried out by means of a plastics-filled, lightweight percolating filter, a recirculation line is provided from the final sedimentation tank of the biological stage to the inlet of the lightweight precolating filter.

3. Process according to Claim 1, characterized in that, between the sludge tank and the separation tank, an overflow in the shape of a mullion is provided and that a baffle wall is provided between the separation tank and the biological purification stage and also between the final sedimentation tank of the biological purification stage and the nitrification stage.

4. process according to one or more of the preceding Claims, characterized in that the sludge from the sludge tank is conditioned, mechanically drained and fed to an ordered disposal dump, the filtrate liquid produced in t